(19) Europäisches Patentamt
European Patent Office
Office européen des brevets

(11) **EP 3 378 626 A1**

(12) **EUROPEAN PATENT APPLICATION**

(43) Date of publication:
**26.09.2018 Bulletin 2018/39**

(51) Int Cl.:
***B29C 64/112*** *(2017.01)*    ***B29C 64/40*** *(2017.01)*

(21) Application number: **18162291.1**

(22) Date of filing: **16.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.03.2017   JP 2017054807**
**21.03.2017   JP 2017054810**

(71) Applicant: **Ricoh Company Ltd.**
**Ohta-ku**
**Tokyo 143-8555 (JP)**

(72) Inventors:
• **NORIKANE, Yoshihiro**
**Ohta-ku, Tokyo 143-8555 (JP)**
• **NAITO, Hiroyuki**
**Ohta-ku, Tokyo 143-8555 (JP)**
• **SUGIURA, Kenji**
**Ohta-ku, Tokyo 143-8555 (JP)**
• **SHIMADA, Yoshihito**
**Ohta-ku, Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **METHOD OF MANUFACTURING SOLID FREEFORM FABRICATION OBJECT AND METHOD OF CREATING DATA FOR SOLID FREEFORM FABRICATION OBJECT**

(57)    A method of manufacturing a solid freeform fabrication includes forming a liquid film constituting a model part (81) and a detail part (83) with a model part forming material and a detail part forming material, respectively, curing the liquid film, repeating the forming and the curing, wherein the model part includes one or more surfaces without a support and the detail part is disposed adjacent to at least one of the one or more surfaces.

FIG. 1

**Description**

BACKGROUND

Technical Field

The present invention relates to a method of manufacturing a solid freeform fabrication object and a method of creating data for solid freeform fabrication object.

Description of the Related Art

As a method of manufacturing a solid freeform fabrication object, a material jetting fabrication method is known, which includes discharging a liquid material for solid freeform fabrication from an inkjet head of a device for solid freeform fabrication, solidifying the liquid material by optical curing, and laminating the solidified liquid material for fabrication.

For example, the material jetting fabrication method has been proposed, which includes fabricating a support portion as support with the same material as that of the model part constituting a solid freeform fabrication object, solidifying the resin as the material, and trimming the support portion.

In addition, another method has been proposed, which includes fabricating an object with a water-insoluble photocuring resin composition, fabricating a support part with a watersoluble material, solidifying the resin composition, and dissolving the support part with water.

SUMMARY

According to the present invention, provided is an improved method of manufacturing a solid freeform fabrication which includes forming a liquid film constituting a model part and a detail part with a model part forming material and a detail part forming material, respectively, curing the liquid film, repeating the forming and the curing, wherein the model part includes one or more surfaces without a support and the detail part is disposed adjacent to at least one of the one or more surfaces.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a schematic diagram illustrating a planar view of an example of the device for solid freeform fabrication according to an embodiment of the present invention;
FIG. 2 is a schematic diagram illustrating a side view of an example of the device for solid freeform fabrication illustrated in FIG. 1;
FIG. 3 is a diagram illustrating a cross section of a fabrication unit in the device for solid freeform fabrication illustrated in FIG. 1;
FIG. 4 is a diagram illustrating fabrication unit in the device for solid freeform fabrication illustrated in FIG. 1;
FIG. 5 is a block diagram illustrating a control at a control unit of the device for solid freeform fabrication illustrated in FIG. 1;

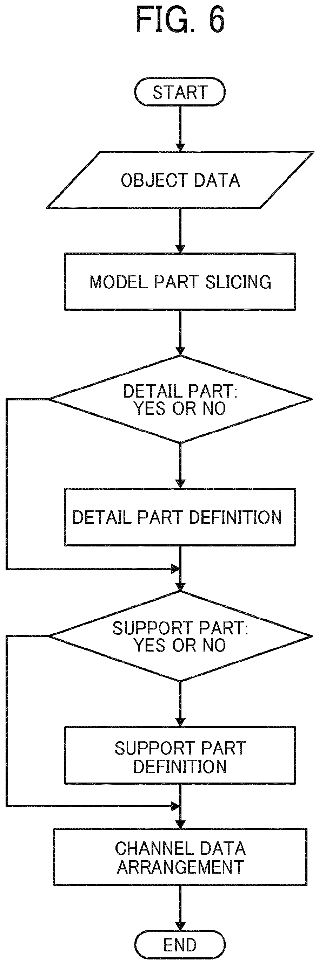

FIG. 6 is a schematic flow chart illustrating the flow of the fabrication;
FIG. 7 is a schematic diagram illustrating manufacturing the solid freeform fabrication objects of Examples 1, 2, and 8 described later;
FIG. 8 is a schematic diagram illustrating the solid freeform fabrication objects of Examples 1, 2, and 8 described later;
FIG. 9 is a schematic diagram illustrating an example of manufacturing a solid freeform fabrication object 3 of Example 3 described later;
FIG. 10 is a schematic diagram illustrating the solid freeform fabrication object 3 of Example 3 described later;
FIG. 11 is a schematic diagram illustrating a side view of an example of manufacturing a solid freeform fabrication object 4 of Example 4 described later;
FIG. 12 is a schematic diagram illustrating a side view of the solid freeform fabrication object 4 of Example 4 described later;
FIG. 13 is a schematic diagram illustrating a planar view of an example of manufacturing a solid freeform fabrication object 5 of Example 5 described later;
FIG. 14 is a schematic diagram illustrating a planar view of the solid freeform fabrication object 5 of Example 5 described later;

FIG. 15 is a schematic diagram illustrating a planar view of an example of manufacturing a solid freeform fabrication object 6 of Example 6 described later;

FIG. 16 is a schematic diagram illustrating a planar view of the solid freeform fabrication object 6 of Example 6 described later;

FIG. 17 is a schematic diagram illustrating manufacturing a solid freeform fabrication object 7 of Example 7 described later;

FIG. 18 is a schematic diagram illustrating the solid freeform fabrication object 7 of Example 7 described later;

FIG. 19 is a schematic diagram illustrating a solid freeform fabrication object 9 of Comparative Example 1 described later;

FIG. 20 is a schematic diagram illustrating an example of a typical solid freeform fabrication object;

FIG. 21 is a schematic diagram illustrating a manufacturing process of solid freeform fabrication objects 2-1, 2-2, and 2-8 of Examples 2-1, 2-2, and 2-8 described later;

FIG. 22 is a schematic diagram illustrating the solid freeform fabrication objects of Examples 2-1, 2-2, and 2-8 described later;

FIG. 23 is a schematic diagram illustrating an example of the manufacturing process of a solid freeform fabrication object 2-3 of Example 2-3 described later;

FIG. 24 is a schematic diagram illustrating the solid freeform fabrication object 2-3 of Example 2-3 described later;

FIG. 25 is a schematic diagram illustrating a side view of an example of manufacturing a solid freeform fabrication object 2-4 of Example 2-4 described later;

FIG. 26 is a schematic diagram illustrating a side view of the solid freeform fabrication object 2-4 of Example 2-4 described later;

FIG. 27 is a schematic diagram illustrating a planar view of an example of manufacturing a solid freeform fabrication object 2-5 of Example 2-5 described later;

FIG. 28 is a schematic diagram illustrating a planar view of the solid freeform fabrication object 2-5 of Example 2-5 described later;

FIG. 29 is a schematic diagram illustrating a planar view of an example of manufacturing a solid freeform fabrication object 2-6 of Example 2-6 described later;

FIG. 30 is a schematic diagram illustrating a planar view of the solid freeform fabrication object 2-6 of Example 2-6 described later;

FIG. 31 is a schematic diagram illustrating manufacturing a solid freeform fabrication object 2-7 of Example 2-7 described later;

FIG. 32 is a schematic diagram illustrating the solid freeform fabrication object 2-7 of Example 2-7 described later;

FIG. 33 is a schematic diagram illustrating a solid freeform fabrication object 2-9 of Comparative Example 2-1 described later; and

FIG. 34 is a schematic diagram illustrating an example of a typical solid freeform fabrication object.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

Method of Manufacturing Solid Freeform Fabrication Object

The method of manufacturing a solid freeform fabrication of the present disclosure includes forming a liquid film constituting a model part and a detail part with a model part forming material and a detail part forming material, curing the liquid film, repeating the forming and the curing, wherein the model part includes one or more surfaces with no support and the detail part is disposed adjacent to at least one of the one or more surfaces. The method may optionally include other steps.

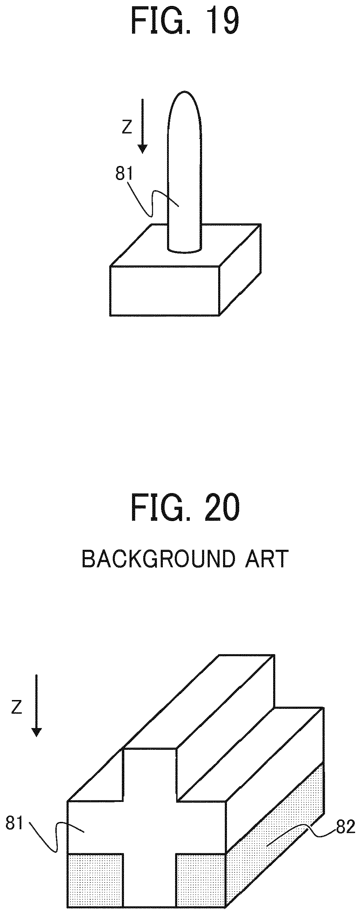

In a typical method of manufacturing a solid freeform fabrication object by laminating layers of a model part, as illustrated in FIG. 20, to form a solid freeform fabrication object having a form difficult to fabricate such as a sticking part with a space in the direction of gravity utilizing a material jetting fabrication method, a support part to support the form of the model part is formed.

However, in the material jetting fabrication method, the liquid material for solid freeform fabrication is discharged and thereafter solidified by photocuring, etc. Therefore, during the time lag between the liquid discharging and the solidification, the liquid flows, causing liquid sagging, so that the form and the height of the solid freeform fabrication object cannot be held.

In addition, due to the liquid sagging, fine form portions are deformed, hollow portions such as holes are buried, model parts and support parts adjacent to each other are mixed and solidified, which makes the boundary of the model part and the support part unclear, and the strength of the model part deteriorates.

According to the investigation, the present inventors have found the following based on the above: Specifically, a model part is formed on a surface orthogonal to the direction of gravity, and a detail part is disposed adjacent to at least one of one or more surfaces of the model part requiring no support to hold a particular form of the model part. Therefore, the model part is held by the detail part without liquid sagging until curable liquid material is solidified. Accordingly, the thus-obtained solid freeform fabrication object accurately reproduces fine form portions and end portions without liquid sagging.

Liquid Film Forming

In the liquid film forming, liquid film constituting a model part and a detail part are formed with a model part forming material and a detail part forming material, respectively. Moreover, it is preferable to form a liquid film constituting a support part with a support part forming material and include other optional processes.

The liquid film contains the liquid film constituting the model part and the detail part and preferably the liquid film constituting the support part.

The liquid film constituting the model part, the detail part, and the support part is respectively formed of the model part forming material, the detail part forming material, and the support forming material.

Model Part Forming Material

The model part forming material forms liquid film constituting the model part.

The part constituting the model part can be fabricated by the model part forming material.

In the present disclosure, the model part means a portion constituting the fabrication object.

The liquid film constituting the model part can be obtained by suitably selecting curable liquid material based on the properties required to fabricate the solid freeform fabrication object. In addition, the curable liquid material can be applied to the same site to adjust the amount of the model part forming material in the liquid film.

The model part forming material has no particular limit and can be suitably selected to suit to a particular application. For example, liquid curable upon application of energy of heat, light, etc. is usable. It is preferable to contain a mono-functional monomer, a polymerizable monomer such as multi-functional monomer, or an oligomer, and other optional components. Preferably, the model part forming material has liquid properties such as viscosity and surface tension suitable for an inkjet head for use in an inkjet printer, etc.

Of these, it is more preferable to use a polymerizable monomer for the model part forming material.

Polymerizable Monomer

The polymerizable monomer includes, for example, a mono-functional monomer and a poly-functional monomer. These can be used alone or in combination.

Mono-functional Monomer

Examples of the mono-functional monomer are acrylamide, N-substituted acrylamide derivative, N,N-di-substituted acrylamide derivative, N-substituted methacrylamide derivative, N,N-di-substituted methacrylamide derivative, and acrylic acid. These can be used alone or in combination. Of these, acrylamide, N,N-dimethylacrylamide, N-isopropylacrylamide, acryloyl morpholine, hydroxyethyl acrylamide, and isobonyl(meth)acrylate are preferable.

The mono-functional monomer is polymerized to obtain an organic polymer.

The proportion of the mono-functional monomer is preferably from 0.5 to 20 percent by mass to the total amount of the model part forming material.

There is no specific limitation to mono-functional monomers other than the mentioned above and it can be suitably selected to suit to a particular application.

Specific examples include, but are not limited to, 2-etylhexyl(meth)acrylate, 2-hydroxyethyl(meth)acrylate, 2-hydroxypropyl(meth)acrylate, caprolactone-modified tetrahydrofurfuryl(meta)acrylate, 3 -methoxybutyl(meth)acrylate, tetrahydro furfuryl(meth)acrylate, lauryl(meth)acrylate, 2-phenoxyethyl(meth)acrylate, isodecyl(meth)acrylate, isooctyl(meth)acrylate, tridecyl(meth)acrylate, caprolactone(meth)acrylate, ethoxyfied nonylphenol(meth)acrylate, and urethane(meth)acrylate.

Multi-functional Monomer

The multi-functional monomer has no specific limit and can be suitably selected to suit to a particular application. For example, bi-functional monomers and tri- or higher functional monomers can be selected. These can be used alone or in combination.

Specific examples of the bi-functional monomer include, but are not limited to, tripropylene glycol di(meth)acrylate, triethylene glycol di(meth)acrylate, tetraethylene glycol di(meth)acrylate, polypropylene glycol di(meth)acrylate, neopentyl glycol hydroxy pivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonane diol(meth)acrylate, diethylene glycol di(meth)acrylate, neopentyl glycol di(meth)acrylate, tripropylene glycol di(meth)acrylate, caprolactone-modified hydroxy pivalic acid neopentyl glycol ester di(meth)acrylate, propoxinated neopentyl glycol di(meth)acrylate, ethoxy-modified bisphenol A di(meth)acrylate, polyethylene glycol 200 di(meth)acrylate, and polyethylene glycol 400 di(meth)acrylate. These can be used alone or in combination.

Specific examples of the tri- or higher functional polymerizable monomers include, but are not limited to, trimethylol propane tri(meth)acrylate, pentaerythritol tri(meth)acrylate, dipentaerythritol hexa(meth)acrylate, tirallyl isocyanate, tri (meth)acrylate of ε-caprolactone modified dipentaerythritol, tetra(meth)acrylate of ε-caprolactone modified dipentaerythritol, penta(meth)acrylate of ε-caprolactone modified dipentaerythritol, hexa(meth)acrylate of ε-caprolactone modified dipentaerythritol, tris(2-hydroxyethyl)isocyanulate tri(meth)acrylate, ethoxified trimethylol propane tri(meth)acrylate, propoxified trimethylol propane tri(meth)acrylate, propoxified glyceryl tri(meth)acrylate, pentaerythritol tetra(meth)acrylate, ditreimethylhol propanetetra(meth)acrylate, dipentaerythritol hydroxypenta(meth)acrylate, ethoxified(pentaerythritol tetra(meth)acrylate, and penta(meth)acrylate ester. These can be used alone or in combination.

Oligomer

As the oligomer, a small polymer of the monomer mentioned above or an article having a reactive unsaturated functional group can be used alone or in combination.

Other Components

The other optional components have no particular limit and can be suitably selected to suit to a particular application. For example, stabilizers, surface treatment chemicals, polymerization initiators, colorants, viscosity modifiers, adhesion imparting agents, antioxidants, anti-aging agents, cross-linking promoters, ultraviolet absorbents, plasticizers, preservatives, and dispersants.

Surface Treatment Chemical

Specific examples of the surface treatment chemical include, but are not limited to, a polyester resin, a polyvinyl acetate resin, a silicone resin, a coumarone resin, an ester of aliphatic acids, glyceride, and wax.

Polymerization Initiator

Examples of the polymerization initiator are a thermal polymerization initiator and a photopolymerization initiator. Of these, a photopolymerization initiator is preferable in terms of storage stability.

As the photopolymerization initiator, any material can be used which produces a radical upon irradiation of light (ultraviolet rays in a wavelength range of 220 to 400 nm).

Specific examples of the photopolymerization initiator include, but are not limited to, acetophenone, 2,2-diethoxyacetophenone, p-dimethylaminoacetone, benzophenone, 2-chlorobenzophenone, p,p'-dichlorobenzophenone, p,p-bisdiethylamonobenzophenoen, Michler's Ketone, benzyl, benzoin, benzoin methylether, benzoin ethylether, benzoin isopropylether, benzoin-n-propylether, benzoin isobutylether, benzoin-n-butylether, benzylmethyl ketal, thioxanthone, 2-chlorothioxanthone, 2-hydroxy-2-methyl-1-phenyl-1-one, 1-(4-isopropylphenyl)-2-hydroxy-2-methylpropane-1-one, methylbenzoyl formate, 1-hydroxy cyclohexyl phenylketone, azobisisobutylo nitrile, benzoylperoxide, and di-tert-butylperoxide. These can be used alone or in combination.

The thermal polymerization initiator is not particularly limited and can be selected to a particular application.

For example, azo-based initiators, peroxide initiators, persulfate initiators, redox initiators are usable.

Specific example of the azo-based initiator include, but are not limited to, VA-044, VA-46B, VA-50, VA-057, VA-061, VA-067, VA-086, 2,2'-azobis(4-methoxy-2,4-dimethylvaleronitrile)(VAZO 33), 2,2'-azobis(2-amidinopropane)dihydrochloride (VAZO 50), 2,2'-azobis(2,4-dimetaylvaleronitrile) (VAZO 52), 2,2'-azobis(isobutylonitrile) (VAZO 64), 2,2'-azobis-2-methylbutylonitrile) (VAZO 67), and 1,1-azobis(1-cyclohexane carbonitrile) (VAZO 88) (all available from Dupont Chemical), 2,2'-azobis(2-cyclopropylpropionitrile), and 2,2'-azo-bis(methylisobutylate) (V-601) (all available from Wako Pure Chemical Industries, Ltd.).

Specific examples of the peroxide initiator include, but are not limited to, benzoyl peroxide, acetyl peroxide, lauroyl peroxide, decanoyl peroxide, dicetyl peroxy dicarbonate, di(4-t-butylcyclohexyl)peroxy dicarbonate (Perkadox 16S) (available from Akzo Nobel), di(2-ethylhexyl)peroxy dicarbonate, t-butyl peroxypivalate (Lupersol 11) (all available from Elf Atochem), t-butylperoxy-2-ethyl hexanoate (Trigonox 21-C50, available from Akzo Nobel), and dicumyl peroxide.

Specific examples of the persulfate initiator include, but are not limited to, potassium persulfate, sodium persulfate, and ammonium persulfate.

Specific examples of redox (oxidation-reduction) initiator include, but are not limited to, a combination of the persulfate initiator and a reducing agent such as sodium metasulfite and sodium sulfite, a system based on the organic peroxide and tertiary amine (such as a system based on benzoyl peroxide and dimethylaniline), and a system based on organic hydroperoxide and transition metal (such as a system based on cumenhydroperoxide and cobalt naftate).

The proportion of the polymerization initiator is preferably not greater than 10 percent by mass and more preferably not greater than 5 percent by mass to the total amount of the model part forming material. When the proportion is 10 percent by mass or less, it is possible to prevent inhibition of curing reaction.

Colorant

A suitable colorant is dissolved or stably dispersed in the model part forming material. Moreover, dyes and pigments having excellent thermal stability are suitable. Of these, solvent dyes are preferable. Two or more kinds of colorants can be mixed to adjust colors, etc.

The proportion of the model part forming material in the liquid film constituting the model part is preferably from 80 to 100 percent by mass to the total of the liquid film. The proportion of the detail part forming material in the liquid film constituting the detail part is preferably from 40 to 60 percent by mass to the total of the liquid film.

Detail Part Forming Material

Liquid film constituting the detail part is formed with the detail part forming material.

The part constituting the detail part can be fabricated by the detail part forming material.

In the present disclosure, the detail part is disposed for a surface requiring no support of the model part to hold the predetermined form of the model part.

The surface requiring no support means that no support is required for the model part along the direction of gravity. Also, the surface requiring no support does not contact with the support part.

It is preferable to form the detail part to prevent liquid sagging before the model part is solidified and accurately reproduce fine form portions and end portions of the obtained model part.

The position of the model part other than the support part against the direction of gravity is, for example, a top surface, a side surface, or an inner wall of the hollow space for a solid freeform fabrication object having a hollow portion such as a hole.

The model part can hold a particular form by the detail part. Rounding of a fine form part, an edge part, a sharp angled part and surface roughening of a smooth surface caused by liquid sagging can be prevented, which makes it possible to accurately reproduce the particular form of a target fabrication object.

Liquid sagging particularly occurs at a portion of the model part of a fabrication object having a thickness of 1 mm or less in the horizontal direction and an inner wall of the fabrication object. The detail part can be disposed at those parts to reproduce a fine form part, an end part (edge), etc., avoiding liquid sagging.

It is preferable that the detail part be disposed adjacent to at least one surface of one or more surfaces requiring no support of the model part.

The detail part may be disposed adjacent to at least a part of the entire of one surface of one or more surfaces requiring no support of the model part and can be disposed on the whole surface.

The surface requiring no support preferably crosses a surface orthogonal to the direction of gravity.

The surface requiring no support is, for example, a surface of the model part not adjacent to the support part.

It is preferable that the detail part be disposed to cover at least one of the one or more surfaces requiring no support of the model part. It is preferable that the detail part be disposed covering the end part of the model part.

Moreover, it is preferable that the detail part be disposed adjacent to the surface requiring no support to hold a particular form of the model part.

It is preferable to set the detail part to be disposed at a site where the maximum width of the edge portion of the model part is 1 mm or less for the measuring after the detail part and the support part are removed.

There is no specific limitation to the measuring device for the maximum width of the model part and it can be suitably selected to suit to a particular application and the form of a solid freeform fabrication object. For example, caliper or micrometer disposed along the horizontal direction of the model part is suitably usable.

It is preferable that the detail part be dissolved in a solution. In addition, it is more preferable that the detail portion be dissolved in a solution by dipping.

It is preferable that solubility of the detail part in a solution be on the same level or lower than that of the support part in terms of reproduction of a fine form portion of the model part.

It is preferable that compatibility of the detail part with the model part be on the same level or lower than that of the support part in terms of reproduction of a fine form portion of the model part.

It is preferable that strength of a solidified detail part be on the same level or lower than that of the support part in order to prevent liquid sagging and hold the form of the model part.

It is preferable that an end of the detail part be not in contact with the model part.

It is preferable that an end of the detail part be one surface.

It is preferable that one surface of the detail part be in contact with the model part and the other surfaces of the detail part be exposed.

The model part may have a hollow part such as a hole. Therefore, at least a part of the detail part may be disposed at a position enclosed by the model part.

It is preferable that the detail part be disposed at a portion of the model part having a thickness of 1 mm or less.

After the detail part is removed, the curvature radius of the end portion of the model part adjacent to the detail part is preferably 0.2 mm or less.

The composition of the detail part forming material and the composition of the support part forming material can be the same or different.

Support Part Forming Material

The support part forming material forms liquid film constituting the support part.

The part constituting the support part can be fabricated by the support part forming material.

In the present disclosure, the support part is disposed adjacent to the model part against the direction of gravity to support the model part from below in order to hold a solid freeform fabrication at a predetermined position until the model part is solidified.

The liquid film constituting the support part can be obtained by selecting the model part forming material based on the properties of the model part in the direction of gravity.

The composition of the support part forming material and the composition of the detail part forming material can be the same or different.

Curing

In the curing, the liquid film formed in the film forming process is cured.

As the curing device for use in the curing process, an ultraviolet (UV) irradiating lamps, electron beam irradiators, etc. are used. The device to cure the liquid film preferably includes a mechanism to remove ozone.

The ultraviolet ray irradiating lamp includes, for example, a high pressure mercury lamp, an ultra high pressure mercury lamp, a metal halide lamp, and light-emitting diode (LED).

The ultra-high pressure mercury lamp is a point light source but if the DeepUV type combined with an optical system to have a high light use efficiency is used, the lamp is capable of emitting light in a short-wavelength range.

Since the metal halide lamp has a wide range of wavelength, it is suitable for colored materials. Halogenated materials of metal such as Pb, Sn, and Fe are used therefor and can be selected to suit to absorption spectrum of a polymerization initiator.

The lamp for use in curing has no particular limit and can be suitably selected to suit to a particular application. Lamps available on the market such as H lamp, D lamp, or V lamp (manufactured by Fusion System) can be used.

In addition, in the case in which a radical polymerizable monomer or an oligomer is used as the curable liquid material, it is preferable that oxygen concentration be low in an environment of liquid forming and curing. For example, an atmosphere replaced with nitrogen is particularly preferable.

Removing

The method of manufacturing a solid freeform fabrication object of the present disclosure preferably includes removing.

In the removing, the formed detailed part and support part are removed.

The detailed part and the support can be removed by supplemental treatment such as trimming, dissolving in a solution, dipping in a solution, heating, ultrasonic wave vibration, or applying energy by stirring. These can be suitably combined.

Of these, the method of dissolving in a solution is preferable. The method of dipping the detail part in a solution is more preferable.

Examples of the solution are water and an organic solvent.

It is preferable that solubility of the detail part in a solution be on the same level or lower than that of the support part in terms of reproduction of a fine form portion of the model part.

Other Optional Process

There is no specific limitation to the other optional processes and it can be suitably selected to suit to a particular application. Specific examples include, but are not limited to, a process of polishing an obtained 3D object and a process of cleaning the object.

In the method of manufacturing a solid freeform fabrication object, each process is repeated multiple times. The number of repetition changes depending on the size and the form of a solid freeform fabrication object to be fabricated and is not generally regulated. Preferably, the average thickness per layer is from 5 to 50 $\mu$m.

When the average thickness is from 5 to 50 $\mu$m, it is possible to accurately fabricate a three-dimensional object free of peel-off so that the layers are laminated as high as the three-dimensional object.

Method of Creating Data of Solid Freeform Fabrication Object

The method of creating data of a solid freeform fabrication object of the present disclosure is set to determine a model part forming portion to form a model part of a solid freeform fabrication object from a detail part form portion to form a detail part, form the model part forming portion on a surface having a normal line vector along the direction of gravity, and dispose the detail part forming portion at a position other than a support part in the direction of gravity of the model part forming portion.

The method of creating data of a solid freeform fabrication object is set to determine to form the detail part at a portion where the thickness of the solid freeform fabrication object is less than a predetermined thickness.

Specifically, the minimum length between arbitrary two points facing each other in the cross section in the horizontal direction of a solid freeform fabrication object is determined as the thickness of the solid freeform fabrication object, and the detail part is formed at a portion where the thickness of the solid freeform fabrication object is a predetermined value or less.

In addition, a user can define the detail part forming portion.

The method of manufacturing a solid freeform fabrication object of the present disclosure and the method of creating data of a solid freeform fabrication object are described with reference to embodiments but the present disclosure is not limited thereto.

Embodiments

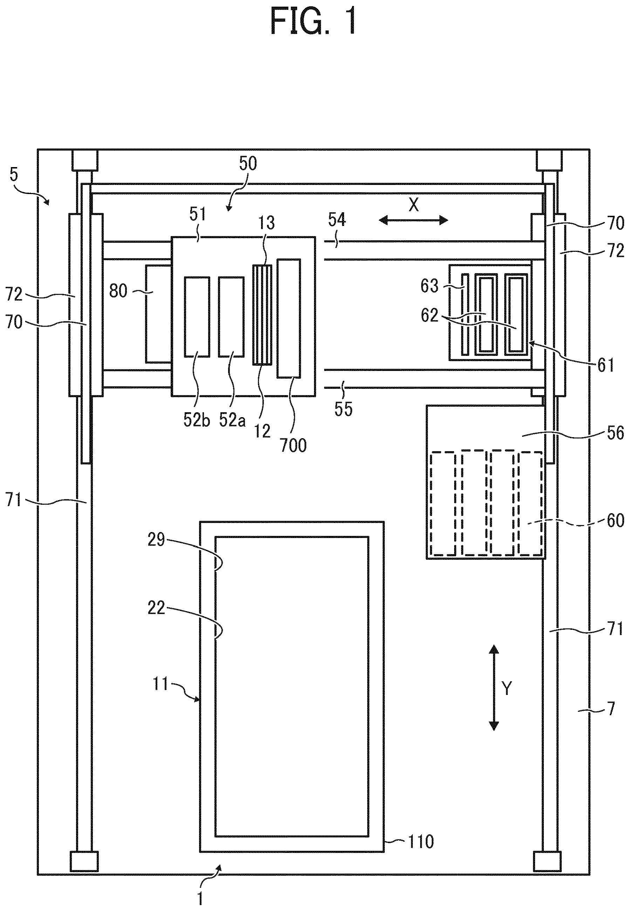

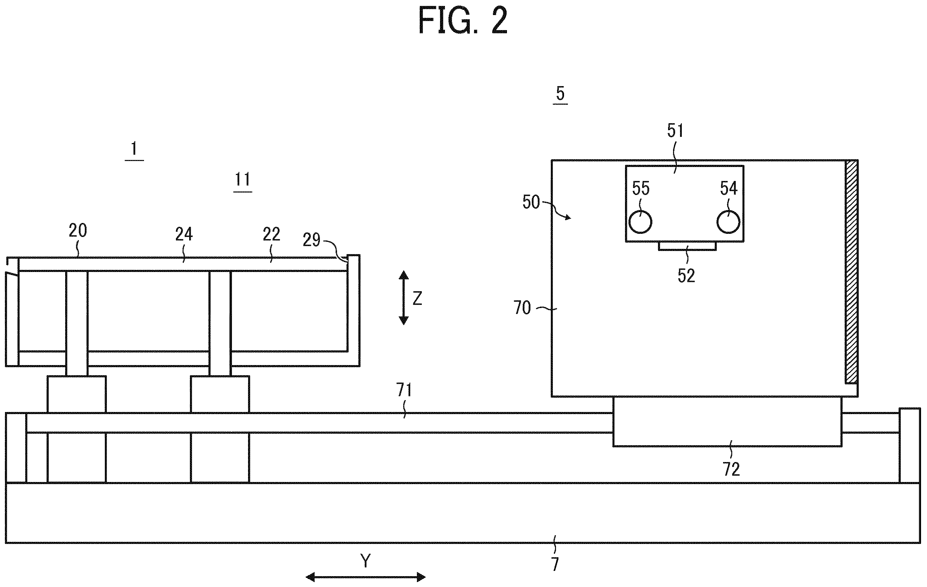

FIGS. 1 to 4 are schematic diagrams illustrating an example of a device for fabricating a solid freeform fabrication object for use in the present disclosure.

FIG. 1 is a diagram illustrating a material jetting fabrication device including a fabrication unit 1 and a fabrication unit 5. A fabrication layer 30 as laminate structured matter of solidified jetted liquid is formed in the fabrication unit 1. The fabrication unit 5 discharges a fabrication liquid 10 to a fabrication stage 24 to form the fabrication layer 30.

The fabrication unit 1 includes a fabrication tank 22 where the fabrication 30 is laminated to form a solid freeform fabrication object. The base of the fabrication tank 22 is movable up and down in the perpendicular direction (height direction) as the fabrication stage 24. The fabrication layer 30 is laminated to form a solid freeform fabrication object on the fabrication stage 24.

The fabrication stage 24 can be moved up and down in the direction indicated by the arrow Z (height direction) by a motor 28 described later.

The fabrication unit 5 includes a liquid discharging unit 50 to discharge the fabrication liquid 10 to the fabrication layer 30 on the fabrication stage 24.

A liquid discharging unit 50 includes a carriage 51 and liquid discharging heads (hereinafter also referred to as head) 52a and 52b carried by a carriage 51.

The carriage 51 is held movable by guiding members 54 and 55. The guiding members 54 and 55 are held movable up and down by side plates 70 disposed on both sides.

This carriage 51 can be reciprocated in the direction X indicated by the arrow (hereinafter referred to as X direction, also applicable to Y direction and Z direction) by a X direction scanning motor constituting an X direction scanning mechanism 550 via a pully and a belt.

These two heads 52a and 52b (hereinafter referred to as head 52 when not necessary to be distinguished) each include two nozzle lines including multiple nozzles through which the fabrication liquid is discharged. The two nozzle lines of the head 52a discharge a model part forming material. It is preferable that the two nozzle lines of the head 52b discharge the detail part forming material and the support part forming. The head configuration is not limited thereto.

Multiple tanks 60 accommodating each liquid are mounted onto a tank mounting unit 56 to supply each liquid to the heads 52a and 52b via a supply tube, etc.

The liquid discharging unit 50 carries a flattening roller 12 and a fabrication liquid curing device 700 on the carriage 51. Along the scanning direction (X direction) of the carriage 51 and the direction of movement of the carriage 51 to form the fabrication plate 30, the fabrication liquid curing device 700, the flattening roller 12, and the head 52 are disposed on the carriage 51 in this sequence.

The flattening roller 12 flattens fine roughness of liquid film formed of liquid supplied from the head 52.

The flattening roller 12 is disposed movable in a reciprocation manner along the stage surface of the fabrication 24 in the Y direction and can be moved by a reciprocation movement mechanism 25, which is described later. In addition, the flattening roller 12 is rotationally driven by the motor 26, which is described later.

The fabrication liquid curing device 700 cures a fabrication liquid 10 discharged from the head 52. As the curing device to cure the fabrication liquid 10, an ultraviolet (UV) irradiating lamps, electron beam irradiators, etc. can be used. It is preferable to dispose a mechanism to remove ozone produced upon irradiation of ultraviolet rays. The lamp includes, for example, a high pressure mercury lamp, an ultra high pressure mercury lamp, a metal halide lamp, and a light emitting diode (LED) lamp. The ultra-high pressure mercury lamp is a point light source. However, a UV irradiation lamp combined with an optical system to have a high light use efficiency is capable of emitting light in a short-wavelength range. Metal halide is suitable for colored material because it has a wide range of wavelengths.

Metal halides of metal such as Pb, Sn, and Fe are used and selected in accordance with absorption spectrum of a polymerization initiator. The lamp has no particular limit to cure the fabrication liquid 10 and can be suitably selected to suit to a particular application.

On one side of the X direction, a maintenance mechanism 61 is disposed to maintain and restore the head 52 of the liquid discharging unit 50.

The maintenance mechanism 61 is mainly constituted of a cap 62 and a wiper 63. The cap 62 is caused to adhere to the nozzle surface (on which the nozzle is formed) in order to suction the fabrication liquid from the nozzle. This is to eject highly-thickened fabrication liquid clogged in the nozzle. Thereafter, due to the meniscus forming (negative pressure in the nozzle) of the nozzle, the wiper 63 wiped off the nozzle surface. In addition, when the fabrication liquid is not discharged, the maintenance mechanism 61 covers the nozzle surface with the cap 62 to prevent the fabrication liquid 10 from being dried and being cured by light.

The fabrication unit 5 includes a slider portion 72 held movable by a guiding member 71 disposed on a base member 7, and the entire fabrication unit 5 can reciprocate in the Y direction (sub-scanning direction) perpendicular to the X direction. This fabrication unit 5 is reciprocated in the Y direction by a Y direction scanning mechanism 552, which is described later.

The discharging unit 50 is disposed movable up and down in the Z direction indicated by the arrow together with the guiding members 54 and 55 by a Z direction moving mechanism 551, which is described later.

The fabrication unit 1 is described in detail.

A fabrication tank 11 has a box-like form and includes a tank with the top surface open. Inside the fabrication tank 22 is disposed the fabrication stage 24 movable up and down. The side surface of the fabrication stage 24 is disposed to abut the inner surface of the fabrication tank 22. The upper surface of the fabrication stage 24 is held horizontally.

The flattening roller 12 carried on the carriage 51 has a bar-like form having a length longer than the inside dimension of the fabrication tank 22 and can reciprocate in the X direction (main scanning direction) along the stage surface together with the carriage 51.

The flattening roller 12 moves in the horizontal direction to pass above the fabrication tank 22 from the outside of the fabrication tank 22 while being rotated by the motor 26. Accordingly, while the flattening roller 12 passes over the fabrication tank 22, the flattening roller 12 flattens the surface of the fabrication liquid 10 discharged onto the fabrication stage 24 to form the fabrication layer 30.

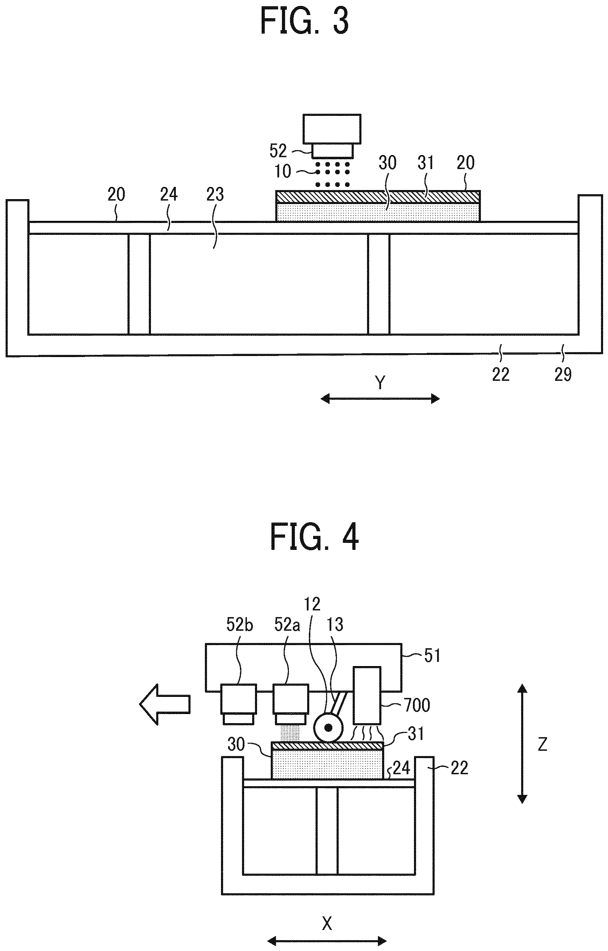

As illustrated in FIG. 4, a liquid removing plate 13 serving as a removing member to remove the fabrication liquid 10 attached to the flattening roller 12 is disposed abutting on the periphery of the flattening roller 12.

The liquid removing plate 13 moves together with the flattening roller 12 while abutting the periphery of the flattening roller 12. In addition, the liquid removing plate 13 can be disposed in the forward or backward (counter) direction to the rotation direction of the flattening roller 12 during flattening.

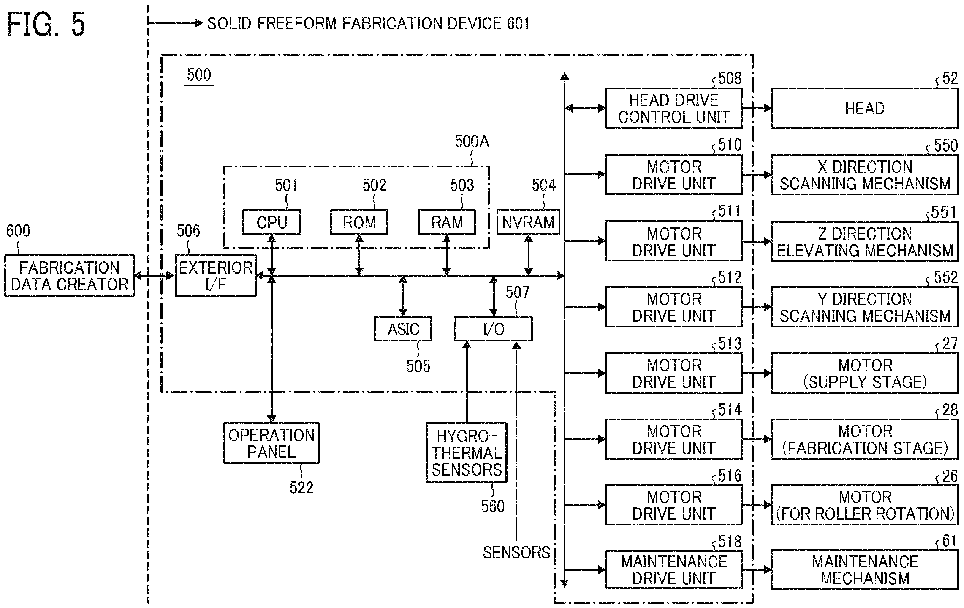

Next, the control unit of the device for solid freeform fabrication is described with reference to FIG. 5. FIG. 5 is a block diagram illustrating the control unit.

The control unit 500 includes a main control unit 500A including a central processing unit (CPU) 501 taking a control of the entire of the device, a read-only memory (ROM) 502 that stores programs to execute control of the fabrication instructions by the CPU 501 and other fixed data, and a random access memory (RAM) 503 that temporarily stores fabrication data, etc.

The control unit 500 includes a non-volatile random access memory (NVRAM) 504 to hold data while the power to the device is blocked off. In addition, the control unit 500 includes an application specific integrated circuit (ASIC) 505 for image processing of various signal processing for image data and processing input and output signals to control the entire device.

The control unit 500 includes an interface (I/F) 506 to send and receive data and signals to be used upon reception of fabrication data from an external fabrication data creating device 600.

The fabrication data creating device 600 creates fabrication data to fabricate a solid freeform fabrication object, which is sliced data obtained by slicing a target solid object into respective fabrication layers. The fabrication data creating device 600 includes an information processing device such as a home computer.

Next, the method of creating fabrication data is described.

The form of a fabrication object is prepared as data of format such as STL prepared using three-dimensional CAD by a user.

Next, whether a detail part 83 is required is determined. The detail part is determined from a thin part, a fine pillar-like form, etc. of a model part having a predetermined width 85 of, in particular, 1 mm or less and can be automatically disposed around the data.

In addition, the user can arbitrarily determine the predetermined width 85. The predetermined width can be changed depending on material. The User possibly takes a procedure of arbitrarily disposing the detail part around the model part on a portion where the user would like to enhance reproducibility. The automatic detail part disposition settings and a user's arbitrary disposition examples are described in Examples described later.

The control unit 500 includes an input-output (I/O) 507 to take in the detected signals of various sensors.

The control unit 500 includes a head drive control unit 508 to drive and control the head 52 of the liquid discharging unit 50.

The control unit 500 includes a motor drive unit 510 to drive motors constituting the X direction scanning mechanism 550 to move the carriage 51 of the liquid discharging unit 50 in the X direction (main scanning direction) and a motor drive unit 512 to drive motors constituting the Y direction scanning mechanism 552 to move the fabrication unit 5 in the Y direction (sub-scanning direction).

The control unit 500 includes a motor drive unit 511 to drive motors constituting a Z direction elevating mechanism 551 to move (elevate) up and down the carriage 51 of the liquid discharging unit 50 in the Z direction.

It is also allowed to have a configuration to elevate the entire of the fabrication unit 5 in the Z direction indicated by the arrow.

The control unit 500 includes a motor drive unit 513 to drive the motor 27 to move up and down a supply stage 23 and a motor drive unit 514 to drive the motor 28 to move up and down the fabrication stage 24.

In addition, the control unit 500 includes a motor drive unit 516 to drive a motor 26 to rotationally drive the flattening roller 12.

Furthermore, the control unit 500 includes a maintenance drive unit 518 to drive a maintenance mechanism 61 of the liquid discharging unit 50.

Detected signals of a temperature and humidity sensor 560 to detect the temperature and the humidity as the environment condition of the device and detected signals from other sensors are input into an I/O 507 of the control unit 500.

The control unit 500 is connected with an operation panel 522 through which information for the device is input and displayed.

As described above, the control unit 500 receives fabrication data from the fabrication data creating device 600. The fabrication data includes the form data (fabrication data) of each fabrication layer 30 as the slice data obtained by slicing the form of the target solid object.

The main control unit 500A takes a control of discharging the liquid fabrication from the head 52 based on the fabrication data of the fabrication layer 30.

The fabrication device includes the fabrication data creating device 600 and a solid freeform fabrication device 601.

Next, the flow of the fabrication is described with reference to FIG. 3.

The description starts from the state in which the first fabrication layer 30 is formed on the fabrication stage 24 of the fabrication tank 22. To form the fabrication layer 30 on the first fabrication layer 30, the fabrication stage 24 of the fabrication tank 22 is lowered in the Z direction.

Thereafter, as illustrated in FIG. 4, liquid droplets of the fabrication liquid (for model part, support part, detail part) are discharged onto the fabrication stage 24 from the heads 52b and 52a of the liquid discharging head 50 to form the fabrication layer 30 (fabrication liquid discharging process). The flattening roller 12 flattens the surface of the fabrication layer 30 formed on the fabrication stage 24 (flattening process), and the fabrication liquid curing device 700 cures the fabrication layer 30 having a flat surface due to the flattening roller 12 by polymerization upon application of ultraviolet rays (fabrication layer curing process). Through this process, the fabrication layer 30 having a predetermined form is laminated on the fabrication layer 30.

The carriage 51 carries the heads 52a and 52b, the flattening roller 12, and the fabrication liquid curing device 700. Therefore, in FIG. 4, while the carriage 51 moves towards the left-hand side indicated by the arrow of the X direction (main scanning direction) of the carriage 51, the fabrication liquid discharging process by the head 52, the flattening process by the flattening roller 12, and the fabrication layer curing process by the fabrication liquid curing device 700 are executed in this order.

Next, another fabrication layer 30 is formed by repeating the fabrication liquid discharging process by the head 52, the flattening process by the flattening roller 12, and the fabrication layer curing process by the fabrication liquid curing device 700. At this point, the newly formed fabricated layer 30 and the fabrication layer 30 immediately therebelow are united to form a part of a three-dimensional object (solid freeform fabrication object). Thereafter, the fabrication liquid discharging process, the flattening process, and the fabrication layer curing process are repeated required times to complete the solid freeform fabrication object.

EXAMPLES

Next, the present disclosure is described in detail with reference to Examples and Comparative Examples but not limited thereto.

Model Part Forming Material

65 parts of isobornyl acrylate (manufactured by KYOEISHA CHEMICAL Co., LTD.) and 33 parts of urethane acrylate (UV-1700B, molecular weight of 2,000, manufactured by The Nippon Synthetic Chemical Industry Co., Ltd.) were uniformly mixed in a beaker. Thereafter, 2 parts of a reaction initiator (IRGACURE® 819, manufactured by BASF) was added thereto. Subsequent to further uniform mixing, the resultant was filtrated by a filter (Membrane filter, average opening diameter of 0.8 $\mu$m, manufactured by Merck Millipore) to obtain a model part forming material.

Preparation of Detail Part Forming Material A

50 parts of acryloyl morpholine (ACMO, manufactured by KJ Chemicals Corporation), 50 parts of 1-dodecanol, 3 parts of a reaction initiator (IRGACURE® 819, manufactured by BASF), and 0.05 parts of 1,4-benzoquinone as polymerization inhibitor were uniformly mixed and caused to pass through a filter (membrane filter, average opening diameter of 0.8 $\mu$m, manufactured by Merck Millipore) to obtain a detail part forming material A.

Preparation of Detail Part Forming Material B

50 parts of acryloyl morpholine (ACMO, manufactured by KJ Chemicals Corporation), 50 parts of 1,5-hexane diol, 15 parts of polyoxypropylene glycol, 3 parts of a reaction initiator (IRGACURE® 819, manufactured by BASF), and 0.05 parts of 1,4-benzoquinone as polymerization inhibitor were uniformly mixed and caused to pass through a filter (Membrane filter, average opening diameter of 0.8 $\mu$m, manufactured by Merck Millipore) to obtain a detail part forming material B.

Preparation of Support Part Forming Material

50 parts of acryloyl morpholine (ACMO, manufactured by KJ Chemicals Corporation), 50 parts of 1,5-hexane diol, 15 parts of polyoxypropylene glycol, 3 parts of a reaction initiator (Initiator 819, manufactured by BASF), and 0.05 parts of 1,4-benzoquinone as polymerization inhibitor were uniformly mixed and caused to pass through a filter (membrane filter, average opening diameter of 0.8 μm, manufactured by Merck Millipore) to obtain a support part forming material.

Fabrication of Solid Freeform Fabrication Object

Example 1

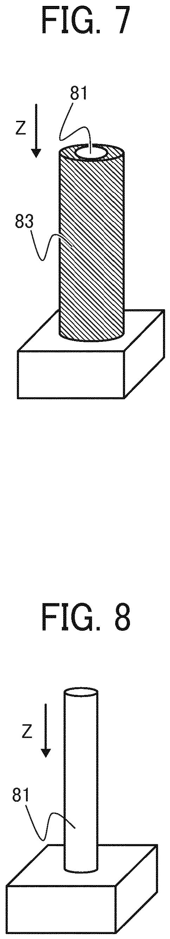

In the device for solid freeform fabrication illustrated in FIG. 1, two tanks communicating with the inkjet head (MH2420, manufactured by Ricoh Industry Company, Ltd.) were filled with the obtained model part forming material and the detail part forming material A. Thereafter, as illustrated in FIG. 7, setting the direction of gravity along the Z direction, the form of the solid freeform fabrication object to be formed was set as a cylinder having a diameter of 0.8 mm and a height of 10 mm, and each inkjet head jetted a particular amount of the model part forming material and a particular amount of the detail part forming material A. The position of the detail part was set by a user.

Thereafter, an ultraviolet irradiator (SPOT CURE SP5-250DB, manufactured by USHIO INC.) emitted an amount of light of 350 mJ/cm$^2$) to cure the model part forming material and the detail part forming material A. This series of processes was repeated.

Thereafter, the obtained fabrication object was dipped in water for two hours to remove the detail part 83 and leave the model part 81, so that a solid freeform fabrication object 1 illustrated in FIG. 8 was manufactured.

Example 2

A solid freeform fabrication object 2 was fabricated in the same manner as in Example 1 except that the detail part forming material A was changed to the detail part forming material B.

Example 3

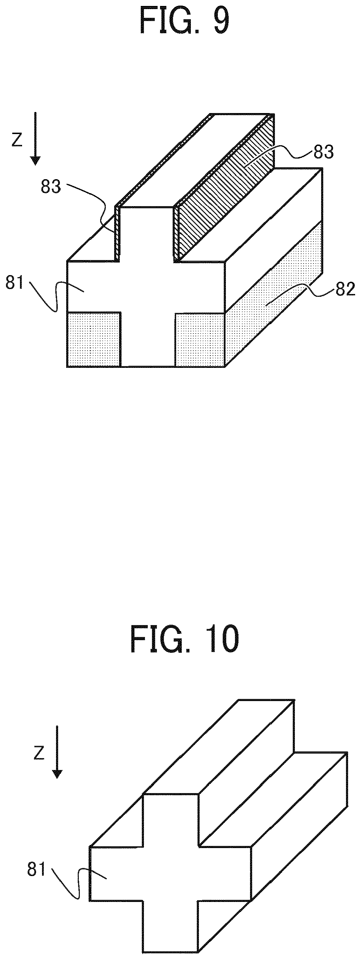

A solid freeform fabrication object 3 (FIG. 10) was fabricated in the same manner as in Example 1 except that the obtained support part forming material was filled with another tank, the form of the solid freeform fabrication object to be fabricated was a cross-like form having a width 85 of 0.9 mm illustrated in FIG. 9, the detail part 83 and the support 82 were set to be automatically disposed, the support part forming material was jetted from the inkjet head, and the support part was removed with water after fabrication.

The support 82 was set to be disposed at a position to prevent the model part 81 from falling before the model part forming material was cured. The detail part 83 was set to be disposed at a position where the length of the model part 81 was 1 mm or less along the direction crossing the direction of gravity to prevent liquid sagging that may occur before curing of the model part forming material.

Example 4

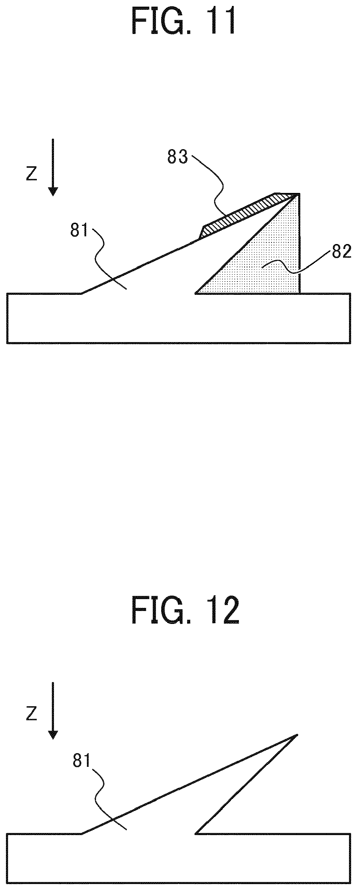

A solid freeform fabrication object 4 (FIG. 12) was fabricated in the same manner as in Example 3 except that the form of the solid freeform fabrication object to be fabricated was set to have a form having a sharp angled portion illustrated in FIG. 11, the detail part 83 was set to be disposed at a position where the end portion (edge) of the model part 81 had a maximum width of 1 mm or less.

The dimension was measured by a caliper after removing the detail part 83 and the support part 82 and confirmed to be the same as data.

Example 5

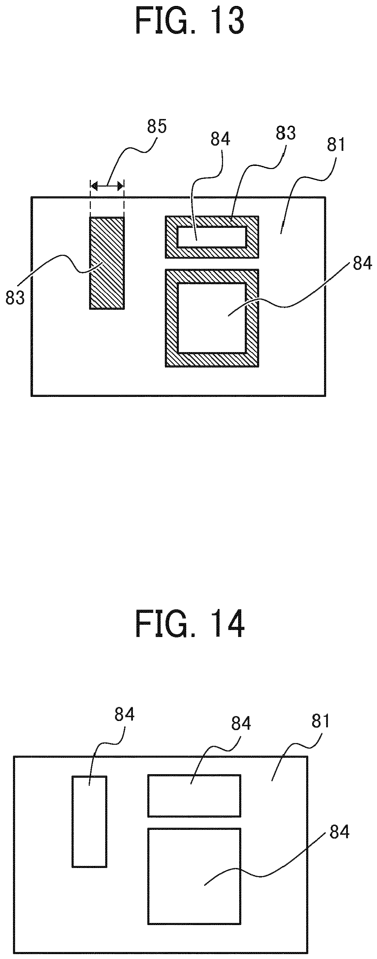

A solid freeform fabrication object 5 was fabricated in the same manner as in Example 3 except that the form of the solid freeform fabrication to be fabricated was set to have a form having a hollow part 84 illustrated in FIG. 13. FIG. 13 is a schematic diagram illustrating a planar view of the manufacturing process of the solid freeform fabrication object 5.

The solid freeform fabrication object 5 was set and manufactured to satisfy that the solid freeform fabrication object 5 included a hollow part 84 having a rectangle when observed from above and the hollow part 84 having a width 85 of less than 1 mm was set to be filled with the detail part forming material. In addition, the hollow part 84 having a width 85 surpassing 1 mm was set in such a manner that the detail part 83 having a thickness of 1 mm was formed on the wall.

Example 6

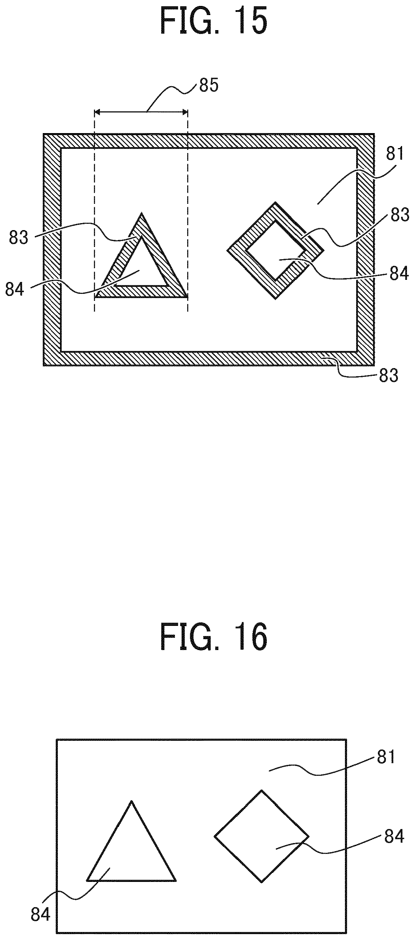

A solid freeform fabrication object 6 (FIG. 16) was fabricated in the same manner as in Example 3 except that the form of the solid freeform fabrication to be fabricated was set to have a form having a hollow part 84 illustrated in FIG. 15.

The solid freeform fabrication object 6 was set and manufactured to include a hollow part 84 having a triangle and a square when observed from above and the hollow part 84 having a width 85 surpassing 1 mm was set and manufactured in such a manner that the thickness of the detail part 83 was 2 mm on the inner wall surface and the outer wall surface.

Example 7

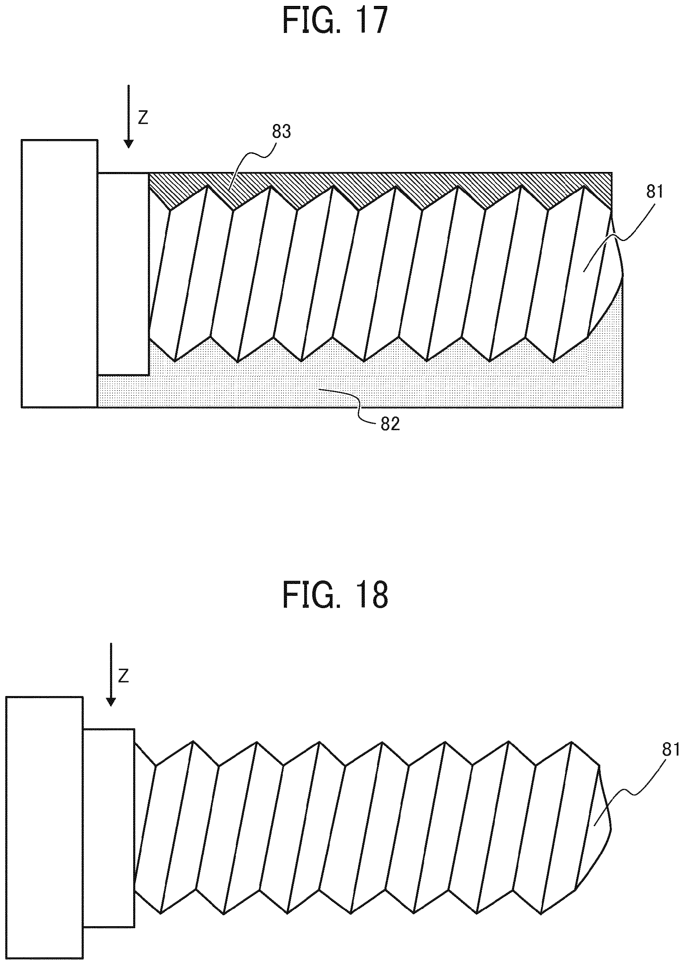

A solid freeform fabrication object 7 (FIG. 18) was fabricated in the same manner as in Example 3 except that the detail part forming material A was changed to the detail part forming material B, the form of the solid freeform fabrication object to be fabricated was changed to a screw-like form illustrated in FIG. 17, and the position of the detail part 83 was set by a user.

Example 8

A solid freeform fabrication object 8 (FIGS. 7 and 8) was fabricated in the same manner as in Example 1 except that the setting was changed to a cylinder having a diameter of 30 mm and a height of 100 mm.

Comparative Example 1

A solid freeform fabrication object 9 (FIG. 19) of Comparative Example 1 was fabricated in the same manner as in Example 1 except that the detail part forming material A was not jetted and only the model part forming material was used to manufacture the solid freeform fabrication 9.

Next, the obtained solid freeform fabrication objects 1 to 8 were evaluated about "degree of free of liquid sagging" in the following manner. The results are shown in Table 1.

Evaluation on Degree of Free of Liquid Sagging

Using the thus-obtained model part forming material, the detail part forming material, and the support part forming material, the solid freeform fabrication objects 1 to 8 and a solid freeform fabrication object 9 manufactured by laminating liquid film having a rectangle form of 32 mm × 10 mm until a height of 10 mm were measured about form profiles of the end portions (edges) of the side along the direction of the movement of the head using a confocal microscope (OPTELICS H1200, manufactured by Lasertec Corporation) to measure the curvature radius of the solid freeform fabrication objects 1 to 8 based on the difference between the form profiles of the solid freeform fabrication objects 1 to 8 and the form profile of the solid freeform fabrication object 9 used as a reference.

The edges of the solid freeform fabrication objects 1 to 4, 7, and 8 were convex, and the edges of the solid freeform fabrication objects 5 and 6 having hollow portions were concave.

In addition, as the curvature radius increases, deformation caused by liquid sagging at end portions of a solid freeform fabrication object increases.

Evaluation Criteria

A: Good fabrication, solid freeform fabrication object obtained as designed, curvature radius of the edge of solid freeform fabrication object was 0.20 mm or less, the end portion of solid freeform fabrication object reproduced edge form

B: Poor fabrication, height of obtained solid freeform fabrication object was 2 mm or more lower than designed value, curvature radius of end portion of solid freeform fabrication object surpassed 0.20 mm, and end portion of solid freeform fabrication object was roundish.

Table 1

| | | Example | | | | | | | | Comparative Example |
|---|---|---|---|---|---|---|---|---|---|---|
| | | 1 | 2 | 3 | 4 | 5 | 6 | 7 | 8 | 1 |
| Solid freeform fabrication object | | 1 | 2 | 3 | 4 | 5 | 6 | 7 | 8 | 9 |
| Forming material | Model part forming material | A | A | A | A | A | A | A | A | A |
| | Detail part forming material A | A | - | A | A | A | A | - | A | - |
| | Detail part forming material B | - | A | - | - | - | - | A | - | - |
| | Support forming material | - | - | A | A | A | A | A | - | - |
| Evaluation result | Curvature radius | 0.1 mm or less | 0.15 mm | 0.13 mm | 0.12 mm | 0.18 mm | 0.16 mm | 0.15 mm | 0.14 mm | 0.4 mm |
| | Degree of free of liquid sagging | A | A | A | A | A | A | A | A | B |

Embodiments of the present disclosure are, for example, as follows.

1. A method of manufacturing a solid freeform fabrication includes forming a liquid film constituting a model part and a detail part, using a model part forming material and a detail part forming material, respectively, curing the liquid film, repeating the forming and the curing, wherein the model part includes one or more surfaces with no support and the detail part is disposed adjacent to at least one of the one or more surfaces.

2. The method according to 1 mentioned above, wherein the model part is supported in the direction of gravity.

3. The method according to 1 or 2 mentioned above, wherein the detail part is disposed to cover the at least one of the one or more surfaces.

4. The method according to any one of 1 to 3 mentioned above, wherein the detail part is disposed to cover an end portion of the model part.

5. The method according to any one of 1 to 4 mentioned above, wherein the detail part is formed to prevent liquid sagging from an end portion of the model part.

6. The method according to any one of 1 to 5 mentioned above, wherein the one or more surfaces cross a surface orthogonal to the direction of gravity.

7. The method according to any one of 1 to 6 mentioned above, further including removing the detail part.

8. The method according to 7 mentioned above, wherein the curvature radius of an end portion of the model part adjacent to the detail part is 0.2 mm or less after the removing.

9. The method according to any one of 1 to 7 mentioned above, wherein one surface of the detail part is adjacent to the model part and other surface are exposed.

10. The method according to 1 or 9 mentioned above, wherein the detail part is disposed at a portion where the model part has a thickness of 1 mm or less.

11. The method according to any one of 1 to 10 mentioned above, wherein the detail part is dissolved in a solution.

12. The method according to 11 mentioned above, wherein the detail part is dipped in the solution.

13. The method according to any one of 1 to 11 mentioned above, wherein the forming further includes forming a liquid film of a support part using a support part forming material to support the model part along the direction of gravity.

14. The method according to 13 mentioned above, wherein the detail part forming material has the same composition as the support part forming material.

15. The method according to 13 or 14 mentioned above, wherein the solubility of the detail part in the solution is on the same level with or lower than that of the support part.

16. The method according to any one of 13 to 15 mentioned above, wherein the compatibility of the model part in the detail part is the same level with or lower than that of the support part.

17. The method according to any one of 13 to 16 mentioned above, wherein the mechanical strength of the detail part is on the same level with or lower than that of the support part.

18. The method of creating data of a solid freeform fabrication object includes determining a model part forming portion to form a model part of the solid freeform fabrication object from a detail part form portion to form a detail part, and setting that the model part forming portion is formed on a surface having a normal line vector along the direction of gravity and the detail part forming portion is positioned other than a support portion supporting the model part forming portion along the direction of gravity.

19. The method according to claim 18 mentioned above, further including determining forming the detail part at a portion where the thickness of the solid freeform fabrication object is less than a predetermined thickness.

20. The method according to 18 or 19 mentioned above, wherein a user defines the detail part.

According to the present disclosure, provided is an improved method of manufacturing which includes accurately reproducing fine form portions and end portions without liquid sagging during solidification of a model part.

Method of Manufacturing Solid Freeform Fabrication Object

The method of manufacturing a solid freeform fabrication of the present disclosure includes forming liquid film constituting a model part, a support part, and a warp prevention part using a curable liquid material, curing the liquid film, repeating the forming and the curing, wherein the warp prevention part faces the support part via the model part.

In a typical method of manufacturing a solid freeform fabrication object by laminating layers of a model part, to form a solid freeform fabrication object having a form difficult to fabricate such as a sticking part with a space in the direction of gravity utilizing a material jetting fabrication method, a support part to support the form of a model part is formed.

However, the material jetting fabrication method involves a problem that liquid resin for solid freeform fabrication is discharged and solidified by photocuring, etc., so that the model part and the support part are mixed over time between liquid discharging and liquid solidification and solidified in such a mixing state, which makes the boundary of the model part and the support part unclear.

In addition, after the support part is removed, the model part warps at the boundary with the support part in a concave or convex manner, which makes it impossible to accurately reproduce the form of a solid freeform fabrication object.

According to the investigation, the present inventors have found the following based on the above: Specifically, the warp prevention part is disposed facing the support part via the model part so that the model part does not warp and the form of a solid freeform fabrication object can be accurately reproduced when the support part is removed.

The part where the warp prevention part is disposed facing the support part via the model part is described next.

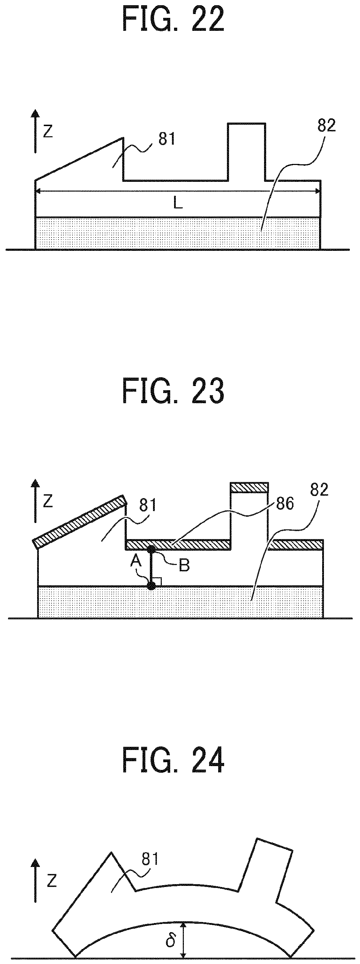

A point of the model part abutting the support part is defined as a point A, and an intersection of a straight line extending toward the inside of the model part and orthogonal to a tangent at the point A and one end of the model part is defined as a point B. Multiple points A and B are taken, the point different from the point A is defined as point A', and the point different from the point B is defined as point B'. At a portion where no support part is formed at the point B and the point B', the facing part of the support part is formed on the line connecting the point B with the point B', and the warp prevention part is formed on the facing part of the support part (FIG. 23, etc.).

No warp prevention part is formed on the part where the support part is symmetrically disposed and the facing part of the part where the support part is not disposed.

Warp Prevention Part Forming Material

The liquid film constituting the warp prevention part is formed with the warp prevention part forming material.

In the present disclosure, the warp prevention part is disposed facing the support part via the model part so that the model part does not warp and the form of a solid freeform fabrication object can be accurately reproduced when the support part is removed.

The warp prevention part includes the case in which the warp prevention part is formed on the facing part of the support part in the part in which the support part is asymmetrically disposed regarding the model part.

The liquid film constituting the warp prevention part is disposed such that the formed warp prevention part faces the formed support part via the formed model part.

As the length of the line AB decreases, warp tends to occur when the warp prevention part is not used. The warp prevention part is effective as the length of the line AB decreases, where A represents a point of the model part abutting the support part and B represents an intersection of a straight line extending toward the inside of the model part and orthogonal to a tangent at the point A and one end of the formed model part. In particular, if the warp prevention part is not disposed a portion in which the length of the line AB is 5 mm or less, the model part significantly warps. The shorter the length of the line AB, the more the warp of the model part. Therefore, to effectively prevent warp by the warp prevention part, the warp prevention part is preferably positioned where the line AB is 5 mm or less, more preferably, 2 mm or less, and particularly preferably, 1 mm or less.

The warp prevention part is preferably dissolved in a solution. In addition, it is more preferable that the warp prevention part be dissolved in a solution by dipping.

The composition of the warp prevention part forming material and the composition of the support part forming material can be the same or different.

Solubility of the warp prevention part in a solution is allowed to be on the same level with or lower than that of the support part to accurately reproduce the form of a target solid freeform fabrication without warp of the model part.

Compatibility of the warp prevention part with model part is preferably on the same level with that of the support part to relieve the warp of the model part.

The mechanical strength of the warp prevention part after solidification may be on the same level with the support part.

The ratio (thickness of the warp prevention part/thickness of the model part) of the warp prevention part to the model part is preferably 0.005 or greater in terms of prevention of warp.

The thickness of the warp prevention part is preferably from 0.3 to 2 mm and more preferably from 0.3 to 1 mm. The thickness of the warp prevention part is preferably from 0.3 mm or greater to prevent warp of the model part. In addition, the thickness of the warp prevention part is preferably 2 mm or less in terms of variety of the form to be fabricated and the cost of forming material.

The thickness of the warp prevention part can be measured by a feeler gauge (JIS standard product A type, manufactured by "Kabushikigaisha Suwan").

EXAMPLES

Preparation of Model Part Forming Material

60 parts of isobornyl acrylate (manufactured by KYOEISHA CHEMICAL Co., LTD.), 10 parts of acryloylmorpholine (ACMO, manufactured by KJ Chemicals Corporation), and 30 parts of urethane acrylate (UV-1700B, molecular weight of 2,000, manufactured by The Nippon Synthetic Chemical Industry Co., Ltd.) were uniformly mixed in a beaker. Thereafter, 2 parts of a reaction initiator (IRGACURE® 819, manufactured by BASF) was added thereto. Subsequent to further uniform mixing, the resultant was filtrated by a filter (CCP-FX-C1B, average opening diameter of 3 $\mu$m, manufactured by ADVANTEC Group) to obtain a model part material.

Preparation of Support Part Forming Material

40 parts of acryloyl morpholine (ACMO, manufactured by KJ Chemicals Corporation), 60 parts of polyoxypropylene glycol, 3 parts of a reaction initiator (IRGACURE® 819, manufactured by BASF), and 0.1 parts of a polymerization inhibitor (phenothiazine, manufactured by TOKYO CHEMICAL INDUSTRY CO., LTD.) were uniformly mixed and caused to pass through a filter (CCP-FX-C1B, average opening diameter of 3 $\mu$m, manufactured by ADVANTEC Group) to obtain a support part forming material.

Preparation of Warp Prevention Part Forming Material

The same material as the support part forming material was used as the warp prevention part.

Fabrication of Solid Freeform Fabrication Object

Example 2-1

In the device for solid freeform fabrication illustrated in FIG. 1, three tanks communicating with the inkjet head (MH2420, manufactured by Ricoh Industry Company, Ltd.) were filled with the obtained model part forming material, the support part forming material, and the warp prevention part forming material. Thereafter, the form of a solid freeform fabrication to be fabricated was set to be a L-shaped form having a breadth of 60 mm, a height of 62 mm, and a thickness 84 of 2.0 mm. In addition, the thickness of the warp prevention part was set to be 2.0 mm. A predetermined amount of the model part forming material, the support part forming material, and the warp prevention part forming material were jetted by each inkjet head. The facing part of the support part was set by a user.

Thereafter, an ultraviolet irradiator (SPOT CURE SP5-250DB, manufactured by USHIO INC.) emitted an amount of light of 350 mJ/cm$^2$) to cure the model part forming material, the support part forming material, and the warp prevention part forming material. This series of processes was repeated.

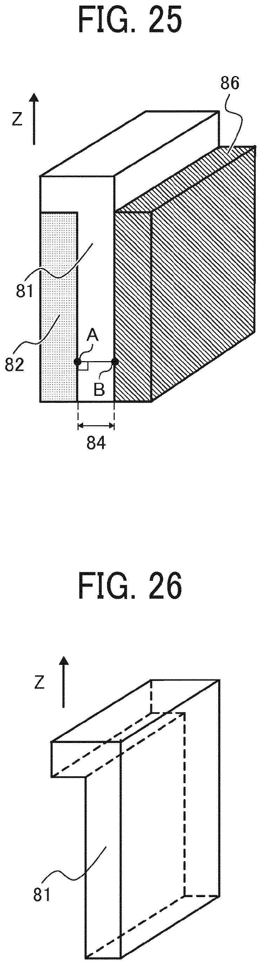

Thereafter, the thus-obtained fabrication object was placed in 1 L water at 40 degrees C and the support part 82 and the warp prevention part 83 were removed by ultrasonic wave vibration over one hour to leave the model part 81. Thereafter, the model part 81 was taken out of water and dried at room temperature (25 degrees C) for 24 hours to manufacture a solid freeform fabrication object 2-1 illustrated in FIG. 26.

Example 2-2

A solid freeform fabrication object 2-2 (FIGS. 25 and 26) was fabricated in the same manner as in Example 2-1 except that the thickness 84 of the warp prevention part was changed to 0.3 mm.

Example 2-3

A solid freeform fabrication object 2-3 (FIGS. 25 and 26) was fabricated in the same manner as in Example 2-1 except that the thickness 84 of the warp prevention part was changed to 0.1 mm.

Example 2-4

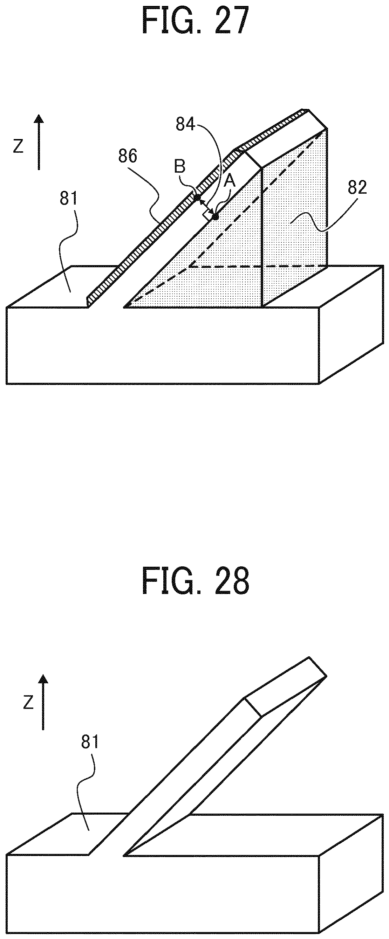

A solid freeform fabrication object 2-4 (FIG. 28) was fabricated in the same manner as in Example 2-1 except that the form of the part of the solid freeform fabrication to be fabricated was changed to have a plate-like form having a thickness 84 of 2.0 mm illustrated in FIG. 27, and the support part 82 and the warp prevention part 83 were automatically positioned.

The support part 82 was set to be disposed at a position to support the model part 81 to hold the solid freeform fabrication object 2-4 at a predetermined position until the model part forming material was solidified.

The warp prevention part 83 faced the support 82 via the model part 81. When the line AB had a length of 5 mm or less, the warp prevention part 83 was set to be disposed having a thickness of 1.0 mm to abut B, where A represents a point of the support part 82 abutting the model part 81 and B represents a point of a straight line extending toward the direction of the model part perpendicular to a tangent of A abutting another end of the model part.

Example 2-5

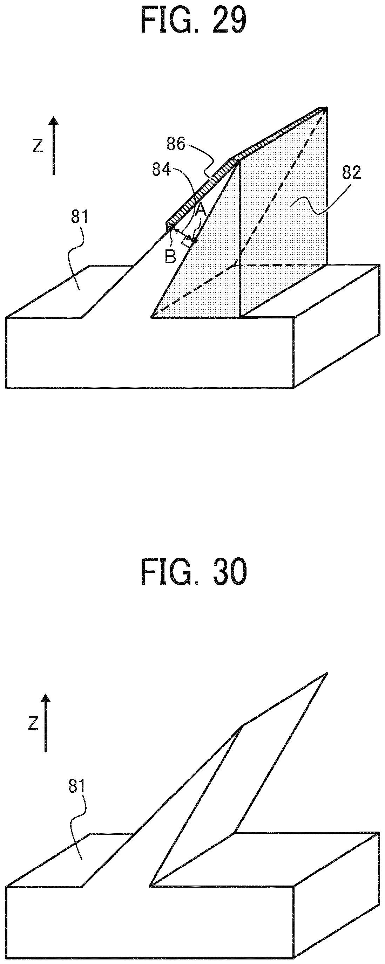

A solid freeform fabrication object 2-5 (FIG. 30) was fabricated in the same manner as in Example 2-4 except that the form of the solid freeform fabrication to be fabricated was set to have a sharp angled portion illustrated in FIG. 29.

In Example 2-4, when the line AB was 5 mm or less, the warp prevention part 83 was set to be disposed to have a thickness of 1.0 mm to abut B.

Comparative Example 2-1

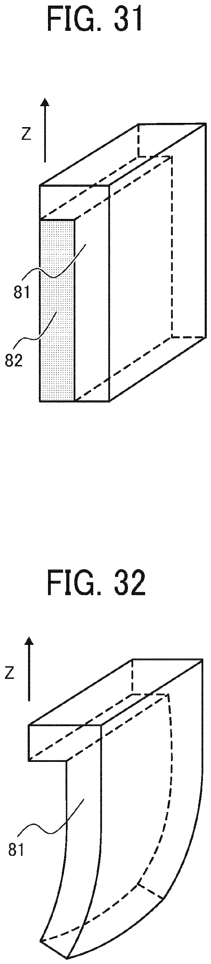

A solid freeform fabrication object 2-6 (FIGS. 31 and 32) of Comparative Example 1 was fabricated in the same manner as in Example 2-1 except that the warp prevention part forming material was not jetted and only the model part forming material and the support part forming material were used.

Comparative Example 2-2

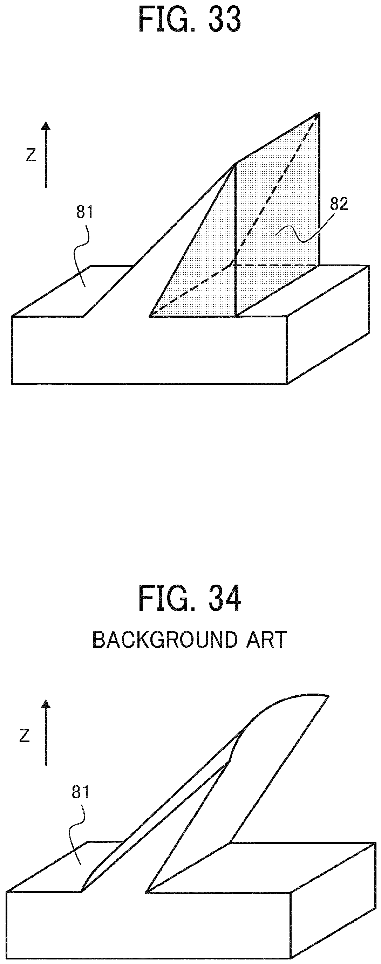

A solid freeform fabrication object 2-7 (FIGS. 33 and 34) of Comparative Example 2-2 was fabricated in the same manner as in Example 2-5 except that the warp prevention part forming material was not jetted and only the model part forming material was used.

Thereafter, the obtained solid freeform fabrication objects 2-1 to 2-7 were evaluated about "degree of free of warp of model part" in the following manner. The results are shown in Table 2.

Evaluation on Free of Warp of Model Part

The length L on the boundary surface of the model part 81 and the support part 82 illustrated in FIG. 22 and camber δ in FIG. 24 of the solid freeform fabrication objects 2-1 to 2-7 obtained by removing the support part 82 and the warp prevention part 83 were measured using a confocal microscope (OPTELICS H1200, manufactured by Lasertec Corporation) to obtain a curvature $\rho$ of the obtained solid freeform fabrication objects 1 to 7 according to the following relation 6. The larger the curvature, the larger the warp of a solid freeform fabrication.

The relation 6 of the camber $\delta$ and the curvature $\rho$ are obtained in the following manner.

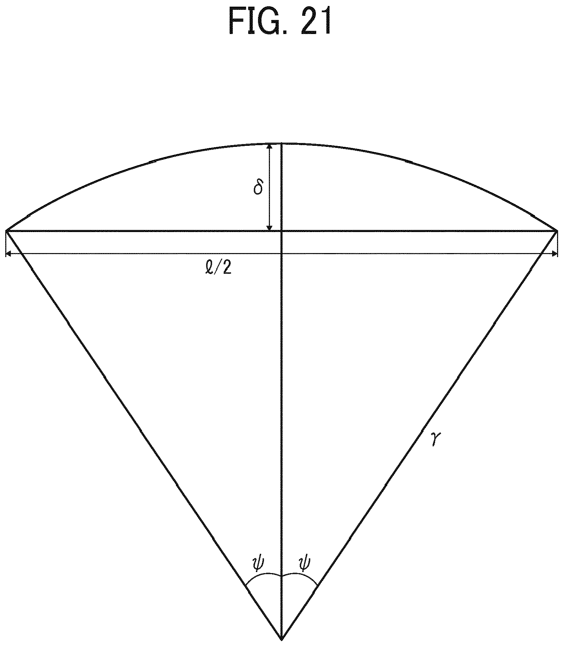

For a figure like an arc illustrated in FIG. 21 with a camber $\delta$, a curvature radius r, a center angle $2\psi$, and a length 1 of subtense, relation 5 was obtained from relations 1 to 3 via relation 4.

$$\sin\varphi = \frac{\frac{\ell}{2}}{r} \quad \cdots \quad \text{Relation 1}$$

$$\cos\varphi = \frac{r-\delta}{r} \quad \cdots \quad \text{Relation 2}$$

$$\sin^2\varphi + \cos^2\varphi = 1 \quad \cdots \quad \text{Relation 3}$$

$$\left(\frac{\frac{\ell}{2}}{r}\right)^2 + \left(\frac{r-\delta}{r}\right)^2 = 1 \quad \cdots \quad \text{Relation 4}$$

$$\therefore \frac{1}{r} = \frac{2\delta}{\frac{\ell^2}{4}+\delta^2} = \rho \quad \cdots \quad \text{Relation 5}$$

In the relation 5, the camber $\delta$ was extremely small in comparison with the length 1 of subtense, $\delta^2$ can be assumed almost 0. In addition, the curvature radius is an extremely large value. Accordingly, the length 1 of subtense can be treated as equal to the length L of the boundary surface of the model part and the support part of a solid freeform fabrication object, so that the following relation 6 can be obtained.

$$\rho = \frac{8\delta}{L^2} \quad \text{Relation 6}$$

Evaluation Criteria

A: Good fabrication, solid freeform fabrication object obtained is as designed and curvature of solid freeform fabrication object is less than 0.03.

B: Good fabrication in some degree, solid freeform fabrication object obtained is as designed and curvature of solid freeform fabrication object is from 0.03 to less than 0.1.

C: Poor fabrication, warp occurs at least one of boundary surface with support 82 and end portion of solid freeform fabrication object for designed form, curvature of solid freeform fabrication object is 0.1 or greater.

Table 1

| | | Example | | | | | Comparative Example | |
|---|---|---|---|---|---|---|---|---|
| | | 1 | 2 | 3 | 4 | 5 | 1 | 2 |
| Solid freeform fabrication object | | 1 | 2 | 3 | 4 | 5 | 6 | 7 |
| Forming material | Model part forming material | A | A | A | A | A | A | A |
| | Support part forming material | A | A | A | A | A | A | A |
| | Warp prevention part forming material | A | A | A | A | A | - | - |
| Length of line AB | | 2.0mm | 2.0mm | 2.0mm | 2.0mm | 0.1 to 5.0 mm | 2.0mm | 0.1 to 5.0 mm |
| Evaluation Result | Thickness of warp prevention part | 2.0mm | 0.3mm | 0.1mm | 1.0mm | 1.0mm | - | - |
| | Thickness of warp prevention part/ thickness of model part | 1 | 0.15 | 0.05 | 0.5 | 1 to 0.2 | - | - |
| | Curvature | 0.020 | 0.028 | 0.044 | 0.022 | 0.044 | 0.222 | 0.303 |
| | Free of warp of model part | A | A | B | A | B | C | C |

Aspects of the present disclosure are, for example, as follows.

1. A method of manufacturing a solid freeform fabrication includes forming a liquid film constituting a model part, a support part, and a warp prevention part, using a curable liquid material, curing the liquid film, repeating the forming and the curing, wherein the warp prevention part faces the support part via the model part.

2. The method according to 1 mentioned above, wherein the warp prevention part is disposed at a position where no support part is required.

3. The method according to 1 or 2 mentioned above, further including removing the formed support part and the formed warp prevention part.

4. The method according to any one of from 1 to 3 mentioned above, wherein the warp prevention part is disposed at a position where the maximum length of a line AB is 5mm or less, where A represents a point where the model part abuts the support part and B represents an intersection of a straight line orthogonal to a tangent line at A and extending toward the inside of the model part and an end of a formed portion of the model part.

5. The method according to 4 mentioned above, wherein the maximum length of the line AB is 2 mm or less.

6. The method according to 5 mentioned above, wherein the maximum length of the line AB is 1 mm or less.

7. The method according to any one of 1 to 6 mentioned above, wherein the ratio (thickness of the warp prevention part/thickness of the model part) of the warp prevention part to the model part is preferably 0.005 or greater.

8. The method according to any one of 1 to 7 mentioned above, wherein the thickness of the warp prevention part is 1 mm or less.

9. The method according to any one of 1 to 8 mentioned above, wherein the formed model part has at least partially a plate-like form.

10. The method according to any one of 1 to 8 mentioned above, wherein the formed model part has at least partially a needle-like form.

11. The method according to any one of 1 to 10 mentioned above, wherein the support part and the warp prevention part are dissolved in a solution.

12. The method according to 11 mentioned above, wherein the support part and the warp prevention part are dissolved in the solution by dipping.

13. The method according to any one of 1 to 12 mentioned above, wherein the warp prevention part and the support part have the same composition.

14. The method according to 1 or 13 mentioned above, wherein the solubility of the warp prevention part in a solution is on the same level with or lower than that of the support part.

15. The method according to 1 or 14 mentioned above, wherein the compatibility of the model part in the warp prevention part is on the same level with that of the support part.

16. The method according to any one of 1 to 15 mentioned above, wherein the mechanical strength of the warp prevention part is on the same level with that of the support part.

17. A method of creating data for a solid freeform fabrication object includes determining a model part forming portion to form a model part of the solid freeform fabrication object, a support part forming portion to form the support part, and a warp prevention part to form a warp prevention part and setting disposition of the warp prevention part facing the support part forming portion via the model part forming portion.

18. The method according to 17 mentioned above, wherein a user defines the warp prevention part.

According to the present disclosure, provided is an improved method of manufacturing a solid freeform fabrication which accurately reproduce the form of a solid freeform fabrication object without a warp when a support part is removed.

Having now fully described embodiments of the present invention, it will be apparent to one of ordinary skill in the art that many changes and modifications can be made thereto without departing from the spirit and scope of embodiments of the invention as set forth herein.

**Claims**

1.   A method of manufacturing a solid freeform fabrication comprising:
     forming a liquid film constituting a model part and a detail part with a model part forming material and a detail part forming material, respectively;
     curing the liquid film;
     repeating the forming and the curing,
     wherein the model part includes one or more surfaces without a support and the detail part is disposed adjacent to at least one of the one or more surfaces.

2.   The method according to claim 1, wherein the model part is supported along a direction of gravity.

3.   The method according to claim 1, wherein the detail part is disposed to cover the at least one of the one or more surfaces.

4.   The method according to claim 1, wherein the detail part covers an end portion of the model part.

5.   The method according to claim 1, wherein the detail part is formed to prevent liquid sagging from an end part of the model part.

6.   The method according to claim 1, wherein the one or more surfaces without a support cross a surface orthogonal to a direction of gravity.

7.   The method according to claim 1, wherein a side of the detail part is adjacent to the model part and other sides are exposed.

8.   The method according to claim 1, wherein the forming further comprises forming a liquid film of a support part with a support part forming material to support the model part along a direction of gravity.

9.   The method according to claim 1, wherein the detail part forming material and the support forming material are identical.

10.  A method of creating data for a solid freeform fabrication object, comprising:

     determining a model part forming portion to form a model part and a detail part forming portion to form a detail part; and
     determining the detail part is formed at a site where the solid freeform fabrication object has a thickness less than a predetermined thickness in a setting that the model part forming portion is formed on a surface having a normal line vector along a direction of gravity and the detail part forming portion is positioned other than a support portion supporting the model part forming portion along the direction of gravity.

11. A method of manufacturing a solid freeform fabrication comprising:

forming a liquid film constituting a model part, a support part, and a warp prevention part with a curable liquid material;
curing the liquid film; and
repeating the forming and the curing,
wherein the warp prevention part faces the support part via the model part and is disposed at a position where no support part is required.

12. The method according to claim 11, wherein the warp prevention part is disposed at a position where the maximum length of a line AB is 5mm or less, where A represents a point where the model part abuts the support part and B represents an intersection of a straight line orthogonal to a tangent line at the point of A and extending toward an inside of the model part and an end of a formed portion of the model part.

13. The method according to claim 11, wherein the warp prevention part has a thickness of 2 mm or less.

# FIG. 1

# FIG. 2

EP 3 378 626 A1

# FIG. 3

Y

# FIG. 4

X

# FIG. 5

→ SOLID FREEFORM FABRICATION DEVICE 601

EP 3 378 626 A1

# FIG. 6

```
                    ( START )
                        │
                        ▼
          ╱─────────────────────────╲
          │      OBJECT DATA         │
          ╲─────────────────────────╱
                        │
                        ▼
          ┌─────────────────────────┐
          │   MODEL PART SLICING     │
          └─────────────────────────┘
                        │
                        ▼
          ◇─────────────────────────◇
          │      DETAIL PART:        │
          │      YES OR NO           │
          ◇─────────────────────────◇
                        │
                        ▼
          ┌─────────────────────────┐
          │  DETAIL PART DEFINITION  │
          └─────────────────────────┘
                        │
                        ▼
          ◇─────────────────────────◇
          │      SUPPORT PART:       │
          │      YES OR NO           │
          ◇─────────────────────────◇
                        │
                        ▼
          ┌─────────────────────────┐
          │      SUPPORT PART        │
          │      DEFINITION          │
          └─────────────────────────┘
                        │
                        ▼
          ┌─────────────────────────┐
          │     CHANNEL DATA         │
          │     ARRANGEMENT          │
          └─────────────────────────┘
                        │
                        ▼
                     ( END )
```

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

BACKGROUND ART

# FIG. 21

# FIG. 22

# FIG. 23

# FIG. 24

# FIG. 25

# FIG. 26

# FIG. 27

# FIG. 28

# FIG. 29

# FIG. 30

# FIG. 31

Z

81

82

# FIG. 32

Z

81

# FIG. 33

# FIG. 34

## BACKGROUND ART

Europäisches
Patentamt
European
Patent Office
Office européen
des brevets

# EUROPEAN SEARCH REPORT

Application Number

EP 18 16 2291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/070052 A1 (OBJET LTD [IL]; RAVICH DIANA [IL]; NAPADENSKY EDUARDO [IL]) 31 May 2012 (2012-05-31) * figure 4A * * page 2, lines 25-29 * * page 5, lines 1-7 * * page 12, lines 1-10 * * page 13, lines 7-10, 15-17 * * page 16, lines 7-13 * ----- | 1-10 | INV. B29C64/112 B29C64/40 |
| X | US 2002/171177 A1 (KRITCHMAN ELISHA M [IL] ET AL) 21 November 2002 (2002-11-21) * figure 5 * * paragraphs [0008], [0010], [0074] * ----- | 11-13 | |

TECHNICAL FIELDS SEARCHED (IPC)

B29C
B33Y

The present search report has been drawn up for all claims

| Place of search | Date of completion of the search | Examiner |
|---|---|---|
| The Hague | 18 July 2018 | Gasner, Benoit |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 16 2291

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2018

| Patent document cited in search report | Publication date | Patent family member(s) | Publication date |
|---|---|---|---|
| WO 2012070052 A1 | 31-05-2012 | CN 103347682 A | 09-10-2013 |
| | | EP 2643148 A1 | 02-10-2013 |
| | | EP 3002110 A1 | 06-04-2016 |
| | | EP 3357674 A1 | 08-08-2018 |
| | | HK 1190117 A1 | 11-08-2017 |
| | | HK 1223332 A1 | 28-07-2017 |
| | | IL 226622 A | 31-07-2016 |
| | | JP 5841162 B2 | 13-01-2016 |
| | | JP 6062019 B2 | 18-01-2017 |
| | | JP 2014503384 A | 13-02-2014 |
| | | JP 2016047651 A | 07-04-2016 |
| | | US 2013241114 A1 | 19-09-2013 |
| | | US 2017282452 A1 | 05-10-2017 |
| | | WO 2012070052 A1 | 31-05-2012 |
| US 2002171177 A1 | 21-11-2002 | US 2002171177 A1 | 21-11-2002 |
| | | US 2004207124 A1 | 21-10-2004 |
| | | US 2008211124 A1 | 04-09-2008 |

EPO FORM P0459

For more details about this annex : see Official Journal of the European Patent Office, No. 12/82